# EUROPEAN PATENT APPLICATION

(11) **EP 4 575 418 A1**
(43) Date of publication of application: **25.06.2025**
(21) Application number: 24220159.8
(22) Date of filing: 16.12.2024
(51) Int. Cl.: G01F 1/24, G01F 1/26, G01F 15/18

(54) **COMPACT HYBRID FLOWMETER FOR MEASURING THE FLOW RATE IN A BRANCH OF A MANIFOLD**

(30) Priority: 20.12.2023 IT 202300027336
(71) Applicant: WATTS INDUSTRIES ITALIA S.r.l., 38121 Trento (IT)
(72) Inventor: CUCCINIELLO, Alfredo Marco, Trento (IT); FONTANA, Sergio, Trento (IT); ORNANO, Francesco, Trento (IT)
(74) Representative: Raimondi, Margherita

(57) **Abstract**

A hybrid flowmeter for measuring the flowrate in a branch duct of a manifold comprises a connection piece for coupling with a manifold (1), a duct (11a) transverse to the manifold and coaxial during use with the branch duct (2), a stem (13) movable coaxially inside the transverse duct with a bottom end part (13a) which interacts with the fluid in the branch duct (2) so as to move the stem (13) axially upon variation of the flowrate through the branch duct (2) and a top end part (13c) which has a visible indicator element and provides a visual indication (14a) of a flowrate measurement. A magnetic element (15) is fixed to the stem (13) and a sensor sensitive to the magnetic field detects the position of the magnetic element (15) and emits an electric signal which is variable upon variation of the position of the magnetic element and indicates a measurement of the flowrate through the branch duct (2).

## Description

The present invention relates to a compact, mechanical/electronic, hybrid flowmeter for detecting the flowrate in a branch duct of a manifold for fluid distribution plants and a manifold assembly equipped with one or more said meters.

It is known in the technical sector relating to the construction of fluid distribution networks that there exists the need to provide multi-way manifolds for outward/return flow of the fluid towards/from the end user devices; an example of these applications consists in the delivery and return manifolds of water distribution piping for thermo-sanitary or heating installations, in particular of the type with underfloor radiant panels.

In the hydro-thermo-sanitary technical sector during the last few years attention has become increasingly focused on the environments in which one lives and the increasingly more demanding requirements in terms of energy consumption. Along with these requirements there are also various regulatory aspects, the most important one of which is the energy certification of buildings, which has become an important factor in the economic valuation of a property. The need to ensure the efficient use of energy in buildings has promoted the use of radiant panels which result in significant advantages from the point of view of both comfort and energy consumption.

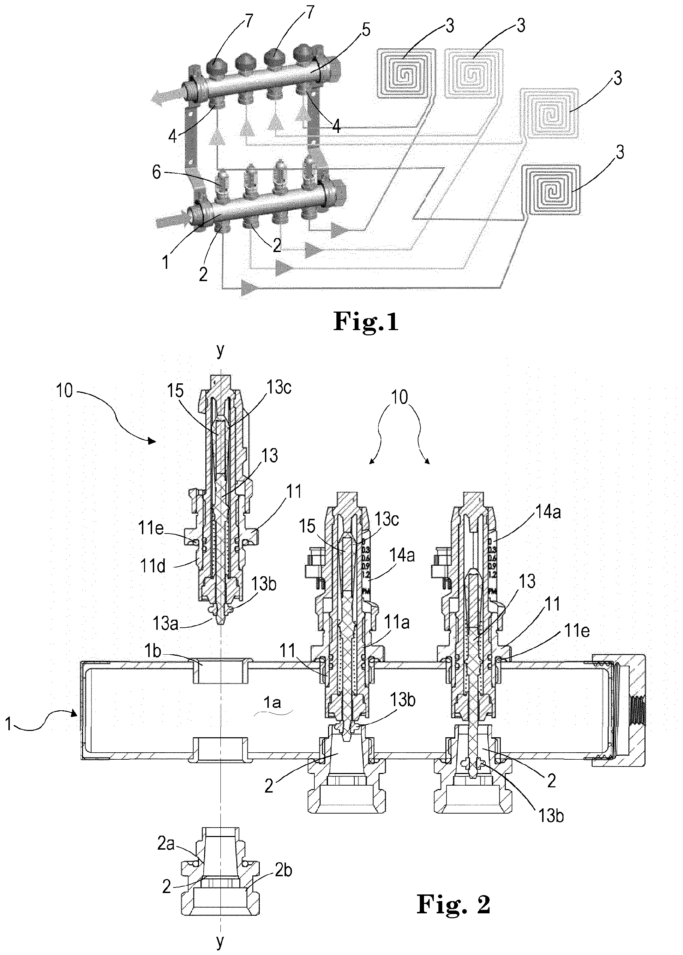

With reference to Figure 1, in this connection it is known that the fluid distribution circuits generally comprise a multi-way delivery manifold 1 which has, branched off therefrom, a plurality of branch ducts 2 which are transverse to the longitudinal direction of the manifold and which supply the flow to respective end user devices 3 (for example serpentine panels for underfloor heating) from where the fluid returns via respective return branch ducts 4 forming branches of a return manifold 5.

A known solution for managing these installations, shown in Fig. 1, involves measuring the flowrate in each branch of the circuit by means flowrate measuring devices 6 (flowmeters) arranged in one of the two manifolds (generally the delivery manifold 1) at the point where the branch duct 2 branches off from the respective circuit section and adjusting or intercepting the flow in the branch itself by means of a regulating valve 7 arranged in the other manifold (generally the return manifold 5) at the point where the respective return branch duct 4 is located.

Another solution for regulating or intercepting the flow in the branch duct can be obtained by using flowmeters 6 which, in addition to showing the value of the flowrate in a circuit branch, also allow the flow to be regulated or intercepted. The measurement of the flowrate in each branch duct of the manifold is therefore an important design and management parameter.

At present, in order to measure the flowrate, mechanical flowmeters provided with an externally visible scale are used. The conventional flowmeters used in the manifolds for radiant panels use a visible indicator which is movable depending on the flowrate in the branched duct and a non-linear scale: a given displacement of an indicator on the scale corresponds to a given value of the flowrate, expressed in a non-linear form.

The advantage of this type of device consists in its compactness and the low cost. In fact, the greater the number of serpentines (end user devices 3) the greater the number of flowmeters required. A disadvantage of the known measuring instrument is that the same is crossed by the fluid which tends to introduce impurities inside it, resulting over time in the flowrate measurement becoming substantially illegible with consequent errors in the adjustments made by the user.

The growing automation and increasing number of regulations governing hydro-thermo-sanitary installations also means that a merely visual reading on-site of the flowrate measurement on the individual branch ducts is not satisfactory, since it does not allow automated and/or remote management of the installation nor the acquisition or storage of the consumption data.

The technical problem which is posed therefore is that of acquiring electronic measurement signals of the flowrate in the single branch ducts of a manifold.

There exist on the market various electronic solutions for measuring the flowrate of a flow which are however bulky or in any case generally costly and therefore incompatible with the application in question. In addition, the electronic solutions do not allow the visual reading, on-site, of the flowrate measured mechanically which is, however, important in the case of interruption of the electric power supply.

A further example of a flowrate measuring device is described and illustrated in US 2011/2655579. Although functional, the known measuring device has however limitations from the point of view of the constructional simplicity, the difficulty of remedial action in the event of malfunctions and therefore the overall costs of the final flowmeter. In addition, the magnet of the aforementioned flowmeter is subject to impacts which may cause splintering thereof, corrosion due to the humidity from contact with the fluid, and overheating which tends to cause a reduction in the magnetism, resulting again in a loss of precision and/or linearity of the measurement.

One object of the present invention is to provide a flowrate measuring device for a branch duct of a manifold which is able to generate an electronic measurement signal of the flowrate which is precise and can be acquired and transmitted.

In connection with this problem it is also required that the flowrate measuring device should be simple, compact and compatible with the dimensions of the manifolds, while being both easy and inexpensive to manufacture.

A further desirable aspect is that the measurement signal acquired should be as precise as possible.

A further desirable aspect is that the measuring device should be easy to calibrate, being in particular able to perform conversion into a substantially linear electric signal of a displacement of an element movable mechanically under the action of a flow.

A further desirable aspect is that the measuring device should also allow the reading on-site of a measurement of the flowrate detected mechanically.

These technical problems are solved according to the present invention by means of a flowmeter for measuring the flowrate of a fluid across a branch duct of a manifold according to Claim 1.

The invention relates furthermore to a manifold assembly equipped with one or more flowmeters.

Further details and technical advantages may be obtained from the following description of a non-limiting example of embodiment of the invention, provided with reference to the accompanying drawings, in which:
- Figure 1:: shows a schematic view of a structure of a serpentine heating installation, with a plurality of branch lines connected to a delivery manifold and to a return manifold;
- Figure 2:: shows a cross-section through a multi-way manifold with branch ducts and respective flowmeters in different assembly and operating positions;
- Figure 3:: shows an exploded axonometric view of an example of embodiment of a flowmeter according to the present invention;
- Figure 4:: shows a vertically sectioned exploded view of the flowmeter according to Fig. 1;
- Figure 5:: shows a front view of the flowmeter according to Fig. 3 in the assembled condition with the stem in a top end-of-travel position;
- Figure 6:: shows a front view of the flowmeter according to Fig. 3 in the assembled condition with the measuring stem in a bottom end-of-travel position;
- Figure 7:: shows a vertically sectioned view along the plane A-A of the flowmeter according to Fig. 5;
- Figure 8:: shows a graph illustrating the linearity of the behaviour of the converted electric signal emitted by the electronic sensor upon variation in the position of the movable stem of a preferred example of a flowmeter according to the present invention.

With reference to Fig. 2, a multi-way manifold 1 has a longitudinal main duct 1a and a plurality of branch ducts 2 (three in the example shown: left-hand, central and right-hand) which are branched off parallel to a transverse direction Y-Y from the main duct 1a and extend inside the manifold 1 in a direction substantially transverse to the direction of flow of the fluid inside the main duct 1a.

Each branch duct 2 in the example has a substantially frustoconical form, with a conicity from the manifold 1 directed towards the branch duct.

In the example of Figure 2, each branch duct 2 is formed by a connection piece 2a which is fixed to the manifold 1 by means of a screw/female-thread coupling with the arrangement of a sealing ring 2b in between.

The free edge of the connection piece 2a, corresponding to the smaller base of the branch duct 2, forms the opening aperture of the duct 2 inside the main duct 1a of the manifold 1.

An example of a flowmeter 10 according to the present invention is arranged coaxially with each branch duct 2, on the opposite side of the main duct 1a in the respective transverse direction.

The example of Figure 2 shows a first flowmeter 10 (on the left-hand side in the figure), during insertion in the manifold 1, as well as the opposite connection piece 2a which defines the branch duct 2. The other two flowmeters 10 are shown in different flowrate measurement positions, i.e. minimum flowrate position (centre) and maximum flowrate position (on the right).

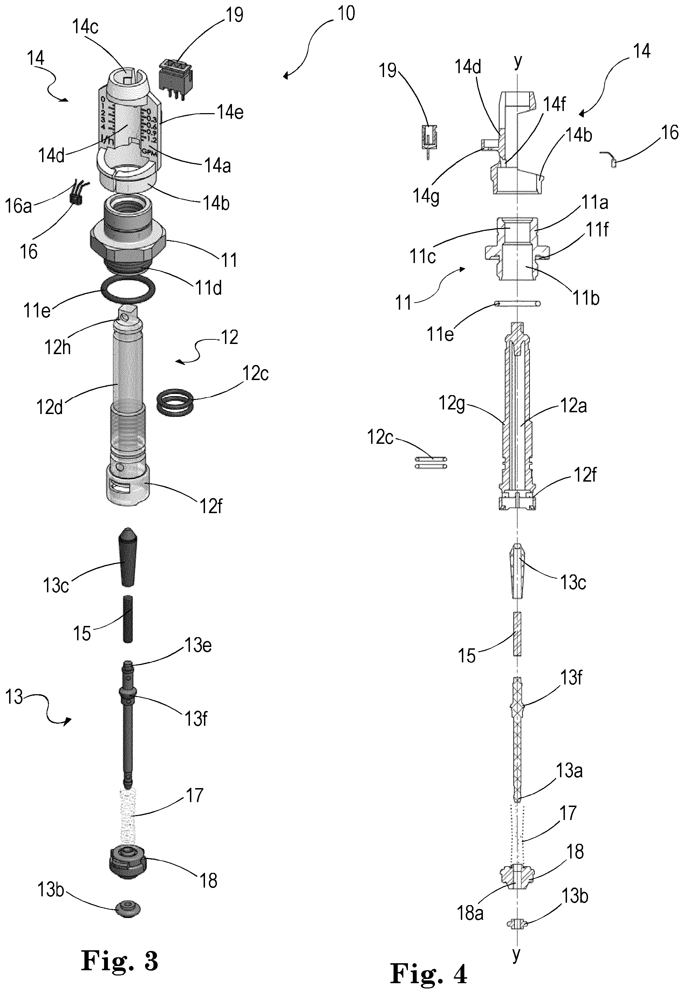

With reference still to Figure 2 and reference also to Figs. 3-4, the example of a flowmeter 10 according to the present invention comprises a connection piece 11 which has an external threading 11d suitable for forming the element for coupling the measuring instrument to the manifold 1.

The connection piece 11 is therefore designed to be coupled with a female thread 1b inside the top opening of the manifold 1, coaxially opposite the transverse branch duct 2, with the arrangement of a sealing element 11e in between.

The body 11 of the connection piece is in turn crossed by a transverse-axis duct 11a which, during use, is coaxial with the aperture of the branch duct 2.

A stem 13 is movable coaxially inside the transverse duct 11a between a top end-of-travel position (central flowmeter 10 of Figure 2) and a bottom end-of-travel position (right-hand flowmeter in the layout of Fig. 2) which respectively correspond to a zero or minimum flowrate condition and a full scale flowrate condition of the instrument for measuring the flowrate inside the branch duct 2. The stem 13 has a bottom end part 13a configured to interact with the fluid in the branch duct 2 so as to move the stem axially upon variation of the flowrate through the duct 2. In particular, the bottom end part 13a has an annular element 13b, such as transverse-axis disc, which is rigidly fixed close to the bottom end of the stem and is designed to be inserted through the aperture of the branch duct 2 so as to be displaced in the axial direction by the fluid flow which passes inside the said duct 2 itself so that, when there is a variation in the flowrate, the stem 13 is moved axially by the action of the flow on the disc 13b. As will become clearer below, a top head 13c of the movable stem 13 is provided with a visible element 13d which acts as an indicator for indicating the position of the stem 13 in the axial direction relative to a graduated scale 14a, preferably located on one side of the stem 13, which forms a preferred example of the means for visually indicating the measurement of the flowrate obtained mechanically and indicated by means of the visible indicator element 13d,

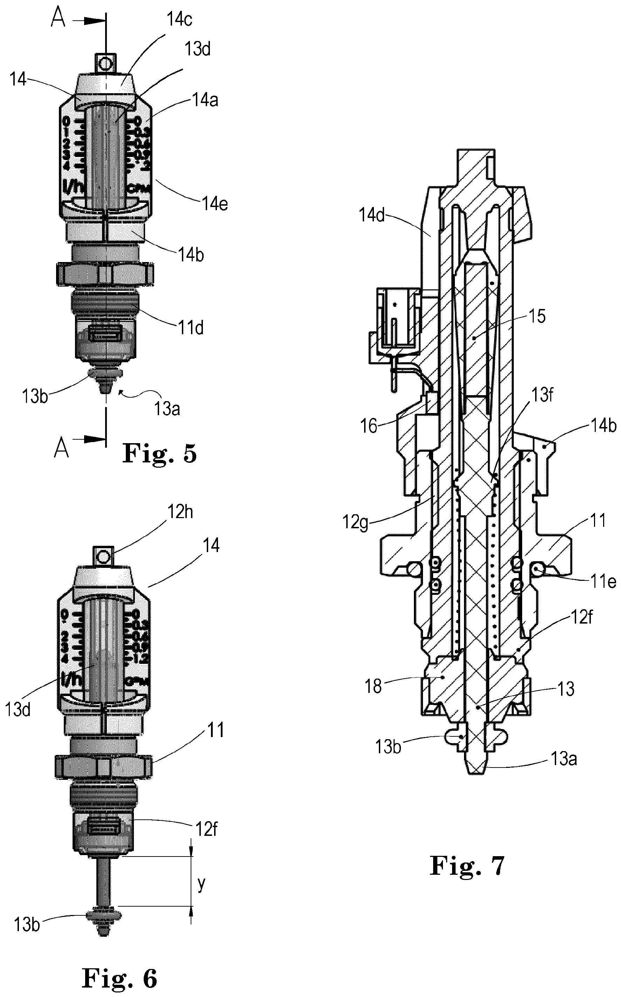

The indicator element may be formed, for example, on one side by the head 13c itself (such as a top free end) or for example by a marking 13d or visible characteristic on the outer surface of the head (Figs. 5-6).

According to an advantageous aspect of the invention, a magnetic element 15 is rigidly fixed to the stem 13, in particular inside the top head 13c, and a sensor 16 sensitive to the magnetic field is arranged so as to detect the position of the magnetic element 15 and emit a corresponding (electric) output signal which is variable upon variation of the position of the magnetic element 15 and which is correlated to the flowrate inside the branch duct 2 and therefore indicates the flowrate measured.

As shown in Figs. 3 and 4, the stem 13 is preferably composed of a bottom rod which has a bottom rod section 13a configured in the vicinity of its bottom end with means for stable coupling with the annular element 13b, and a top rod section configured at its top end with means 13e for coupling with the top head 13c which is hollow and open at the bottom.

As shown in Fig. 7, once coupling has been performed, the magnetic element 15, which is for example in the form of a cylindrical permanent magnet, is preferably coaxially and stably inserted inside the cavity of the head of the stem 13.

The head 13c has preferably a variable external diameter with upwardly directed tapering.

In the intermediate position of the stem 13, the bottom rod has an annular projection 13f situated between the top section and the bottom section of the rod.

In greater detail and with further reference to Figs. 3-6, the through-duct 11a defined by the connection piece 11 includes a bottom cavity 11b and a top cavity 11c which communicate with each other, the bottom cavity 11b has a diameter bigger than that of the top cavity. The top cavity has an internal female thread. An annular flange, preferably with a polygonal perimeter, projects from the outer surface of the connection piece 11 in an intermediate position along the axial extension thereof and has a bottom annular recess 11f (Fig. 4) for housing the sealing means such as an O-ring 11e arranged between the connection piece 11 and the manifold 1.

The external threading 11d is formed on the outer surface of the connection piece below the annular flange, substantially opposite the bottom internal cavity 11b.

The duct 11a has, inserted inside it, a bell member 12 with a coaxial cavity 12a which is open at the bottom and inside which the stem 13 is inserted, said stem forming the movable measuring element of the instrument. One or more sealing elements 12c are arranged between the connection piece 11 and the bell member 12.

The bell member 12 defines a coaxial housing for the stem 13 which has a transparent wall 12d which allows the indicator element 13d of the stem 13 to be seen.

The bell member 12 has a widened bottom base 12f which, during use, projects from the bottom beyond the connection piece 11 inside the manifold 1.

The bell member 12 is closed at the bottom by a closing member 18 which is fixed to the bell member 12 by means of a coupling system for example of the snap-engagement type. The closing member 18 has a coaxial hole 18a for the passage of the stem 13, with dimensions such as not to allow the passage of annular element 13b at the bottom end, so that the bottom end 13a of the stem 13 projects outside of the bell member into the manifold 1.

According to conventional technology, the bell member 12 may have an external threading 12g for a screw/female-thread coupling with the internal female thread of the connection piece 11 so that, by rotating the bell member 12, it is possible to displace it in the axial direction with respect to the connection piece 11 and therefore the manifold 1. This is advantageous since it allows the bottom end of the bell member 12 provided with closing member 18 to open/close the aperture 2 of the branch duct 2a. Following a screwing/unscrewing operation, the bell member may therefore advance or retract in the axial direction, allowing the regulation or interception of the flow, by means of opening/closing of the passage between the closing member 18 and the seat 2a.

The bell member 12 can be rotated with respect to the connection piece by acting on the top end 12h of the bell member which is suitably provided with an operating form such as a square shape which may be rotated by means of a spanner. Therefore, the flowmeter 10 can also be used to close the branch duct 2 or to adjust the flowrate through the duct itself.

A resilient element 17, in particular a spring, is arranged inside the bell member 12, coaxially with the stem 13 and reacts on one side against a top wall of the closing member 18 and on the other side against an annular projection 13f of the stem 13.

The spring 17 is therefore arranged to oppose the free falling movement of the stem 13 and at the same time oppose the thrust of the fluid against the disc 13b, resulting also in calibration of the instrument.

A cap 14 is arranged on the outside of the bell member 12 and has one or more graduated scales 14a forming the measurement indication means. In order to make visible from the outside the relative position of the indicator 13d with respect to the graduated scale 14a, at least the bell member part 12d arranged opposite the scale is conveniently made of transparent material.

In the embodiment shown, the cap 14 has a bottom sleeve 14b suitable for coaxial coupling with the connection piece 11 and a top sleeve 14c suitable for coaxial coupling with the tip of the bell member 12. The two sleeves are connected by a rear vertical wall 14d which has a hollow semicylindrical central body suitable for housing the transparent top part 12d of the bell member and one or two lateral vertical flanges 14 on which the graduated indication scales are visible. Therefore, the cap 14 is open at the front so as to allow the visibility of the head of the stem 13 with the indicator element 13d which indicates the measurement on the graduated scales 14a.

With reference to Figures 4-7, the cap has a first seat 14f for mounting the magnetic sensor 16. Preferably, the seat 14f is formed as low as possible in the vicinity of the connection piece 11 so as to maximize the working measurement travel of the stem 13. For example, the seat is formed in the rear wall in the vicinity of or next to the bottom sleeve 14b for coupling with the connection piece 11, so that the sensor 16 is in any case arranged above the said connection piece 11.

Advantageously, the first seat 14f is preferably a seat inset in the rear wall 14d so as to reduce the radial distance from the magnetic element 15 and increase the power of the signal detected.

A second seat 14g allows the mounting of a connector 19 which acts as an interface for connecting externally the electric terminals 16a of the sensor.

Preferably, the second seat 14g is formed above the first seat 14f in the axial direction. Preferably, the second seat 14g is arranged radially on the outside of the first seat 14f in the radial direction and in particular is formed by a ledge projecting rearwards from the rear wall, with the hollow seat 14g directed upwards and bottom surface perforated so as to allow the passage of the electrical connections of the connector 19 to the output contacts 16a of the sensor 16.

The sensor mounting seat 14f and the connector mounting seat 14g advantageously allow the indicator element 13d of the stem 13 to remain visible. As regards the sensor 16, it may be preferably a Hall effect sensor, particularly advantageous since it is able to detect the presence, the intensity and the polarity of the magnetic field due to the magnetic element 15 and emit a variable output signal depending on these parameters.

With reference to Figures 3-7, for assembly of the flowmeter, the following procedure is possible;
- the bell member 12, provided with the sealing means on the outside, is screwed into the connection piece 11, inserting it from the bottom upwards;
- the magnetic element 15 is inserted inside the head 13a of the stem 13 and the head itself is coupled to the top end 13e of the rod, thus locking the magnetic element 15 in position;
- the stem 13 is inserted inside the bell member 12 with the spring 17 coaxially arranged on the rod;
- the closing member 18 is engaged in the bottom cavity of bell member 12, inserting the bottom end of the rod coaxially through the coaxial hole 18a of the closing member 18 so that the end part 13a of the stem projects from the bell member 12;
- the disc 13b is mounted on the end part of the stem 13;
- the cap 14 is assembled by inserting the sensor 16 inside the first inset seat 14f and connector 19 inside the second mounting seat 14g;
- the cap 14 is mounted coaxially on the bell member 12 by engaging the bottom sleeve 14b onto the connection piece 11 and the top sleeve 14c onto the bell member 12.

With reference to Figures 2 and 5-7, the operation of the flowmeter 10 may be as follows:
- once the connection piece 11 has been screwed and locked onto the manifold by means of the screw/female-thread coupling, the end part 13a of the stem provided with the disc 13b is arranged inside the duct 2 into which the fluid from the manifold flows;
- by acting on the reaction disc 13b the fluid causes retraction of the stem 13 against the action of the spring 17,
resulting in a corresponding displacement of the visible indicator 13d inside the transparent part 12d of the bell member, varying the position thereof relative to the graduated scale 14a shown on the cap 14.

If necessary, it is possible to act on the top end 12h of the bell member so as to rotate it with respect to the connection piece 11, causing the downward movement of the closing member 18 towards the branch duct 2, so as to vary opening thereof or close it completely. This may be advantageous if the duct 2 needs to be sectioned from the side of the manifold 1 for example in the event of damage.

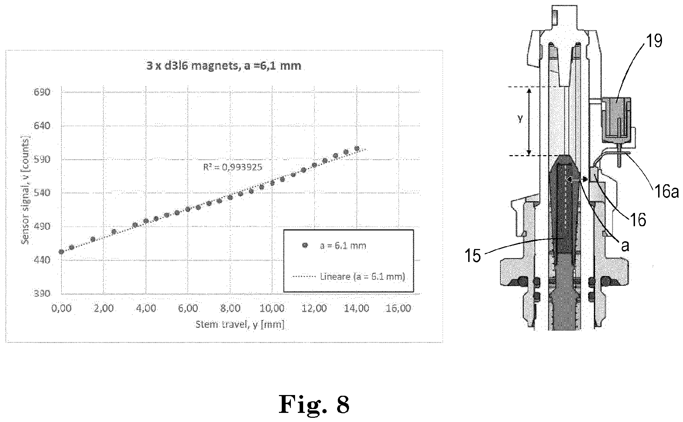

With reference to Fig. 8, the sensor is arranged at a radial distance "a" from the axis of the stem 13 and therefore from the axis of the magnetic element 15. The radial distance "a" is less than the travel "y" of the stem in the axial direction Y-Y. For typical applications, a preferred distance may be for example between 4 and 8 mm. In the preferred example shown, the distance is about 6 mm.

The magnetic element 15 has preferably an axial dimension greater than or equal to the travel "y" of the stem 13.

As can be seen in Figure 8, with this configuration, the measuring instrument has an optimum linearity in the response to the movement of the stem 13, therefore ensuring an accurate measurement of the flowrate for the entire travel of the stem 13.

Advantageously, the Applicants have noted that the linearity between the electric signal emitted by the sensor and the displacement of the magnet 15 depends in particular on the position of the sensor relative to the position and the travel of the magnet 15, so that it is easy to suitably define the radial distance "a" of the sensor and the size and travel of the magnet 15 in order to obtain a desired degree of accuracy and measurement range. In particular, too small a radial distance "a" penalizes the linearity while too a large a distance penalizes the signal power.

It is therefore preferable that the relative positioning of the sensor and magnet, the size and the length of the axial travel of the magnet should be defined so as to maintain a substantially linear response of the converted position signal from the sensor over the entire travel between the two end-of-travel positions of the stem.

Advantageously, the annular element 13b for interaction with the fluid may be exchanged with a different element which has a different flow resistance, thus varying the full scale of the measuring instrument in a simple and low-cost manner. This may be provided in the form of a kit with different annular elements 13b

It is therefore clear how the instrument according to the invention for measuring the flowrate of a fluid is suitable for providing a precise and repeatable measurement of the flowrate in a branch duct of a manifold, said measurement advantageously being legible on-site on a external display scale both remotely and by means of transmission of the output signal of the magnetic sensor, thus enabling the remote diagnosis and remote monitoring of the operating parameters of the hydro-thermo-sanitary installation.

In addition, the instrument is suitable for providing the measurement also in the case of soiling of the transparent housing of the stem due to the entry of impurities.

The instrument also has small dimensions, is easy and inexpensive to produce and assemble, as well as being easy to apply using traditional methods by any installation engineer without the need to vary the procedures used. Indeed it is also possible to modify pre-existing flowmeters or regulating valves of the movable stem type by replacing the stem with a stem equipped with magnetic element and adding a cap equipped with magnetic sensor, thereby resulting in savings both in the amount of material used and costs.

With the instrument it is also possible to adjust quickly and precisely start-up of the installation during which the design flowrates are set.

## Claims

1. Hybrid flowmeter for measuring the flowrate in a branch duct of a manifold, comprising:
connection means (11) for coupling with a manifold (1), defining a transverse duct (11a) which in use is transverse to the manifold and coaxial with the branch duct (2);
a stem (13) movable coaxially inside the transverse duct between a top end-of-travel position and a bottom end-of-travel position, the stem (13) having a bottom end part (13a) configured to interact with the fluid in the branch duct (2) so as to move the stem (13) axially upon variation of the flowrate through the branch duct (2) and a top head (13c) which has a visible indicator element designed to indicate the position of the stem in the axial direction;
visual indication means (14a) for visually indicating a flowrate measurement by means of the visible indicator element;
a magnetic element (15) integral in translation with the stem (13);
a sensor sensitive to the magnetic field, arranged to detect the position of the magnetic element (15) and to emit an electric signal which is variable upon variation of the position of the magnetic element and indicates a measurement of the flowrate through the branch duct (2),
**characterized in that**
the magnetic element (15) is coaxially and stably inserted inside a coaxial cavity in the head of the stem (13).

2. Flowmeter according to the preceding claims, **characterized in that** the magnetic element (15) has an axial dimension greater than or equal to the travel (y) of the stem in the axial/transverse direction.

3. Flowmeter according to the preceding claims, further comprising a bell member (12) which is inserted inside the transverse duct (11a) and provided with a coaxial cavity (12a) open at the bottom and inside which the stem (13) is coaxially inserted, wherein the bell member has at least one transparent wall (12d) which allows the indicator element (13d) of the stem (13) to be seen.

4. Flowmeter according to the preceding claim, wherein the bell member (12) has a widened bottom base (12f) which, during use, projects at the bottom beyond the transverse duct (11a) inside the manifold (1) and wherein the bell member is closed at the bottom by a closing member (18), the closing member (18) having a coaxial hole (18a) through which the stem (13) passes, with dimensions such that the bottom end part (13a) of the stem (13) projects outside of the bell member inside the manifold (1).

5. Flowmeter according to one of the preceding claims, comprising a resilient element (17), in particular a spring, arranged coaxially with the stem (13) and exerting a thrust which opposes the free falling movement of the stem (13) towards the bottom end-of-travel position and/or counteracts a thrust of the fluid on the bottom end part (13a) of the stem (13).

6. Flowmeter according to one of the preceding claims, comprising a cap (14) arranged on the outside of the bell member (12) and having said visual indication means for visually indicating a flowrate measurement, wherein a transparent wall (12d) of the bell member (12) is arranged opposite the visual indication means so that the relative position of the indicator element (13d) with respect to the visual indication means (14a) is visible.

7. Flowmeter according to the preceding claim, wherein the visual indication means include one or more graduated scales (14a) for visually reading the measurement, wherein a transparent wall (12d) of the bell member (12) is arranged opposite the one or more scales so that the relative position of the indicator element (13d) with respect to the one or more graduated scales (14a) is visible.

8. Flowmeter according to one of Claims 6 or 7, wherein the cap (14) has a bottom sleeve (14b) suitable for coaxial coupling with a connection piece (11) of the connection means, a rear vertical wall (14d) which has a central body suitable for coupling with the bell member and one or two lateral vertical flanges (14e), the visual indication means being formed on one and/or the other of the lateral flanges.

9. Flowmeter according to one of Claims 6-8, wherein the cap (14) is open at the front so as to allow visibility of the head of the stem (13) with the indicator element (13d) which indicates the measurement on the visual indication means (14a).

10. Flowmeter according to one of Claims 6-9, wherein the cap has a first seat (14f) for mounting the magnetic sensor (16), arranged so that the indicator element (13d) of the stem (13) remains visible.

11. Flowmeter according to the preceding claim, wherein the first seat is formed in the rear wall in the vicinity or next to the bottom sleeve (14b) for coupling with the connection piece (11), so that the sensor (16) is arranged higher than the connection piece (11) in the transverse/axial direction.

12. Flowmeter according to one of Claims 10 or 11, wherein the first seat (14f) is a seat inset in a wall of the cap, in particular in the rear wall (14d).

13. Flowmeter according to one of Claims 10-12, wherein the cap comprises a second seat (14g) in which a connector (19) for externally connecting electric contact terminals (16a) of the magnetic sensor (16) is mounted.

14. Flowmeter according to the preceding claim, wherein the second seat (14g) is formed above the first seat (14f) in the axial direction and/or the second seat (14g) is radially on the outside of the first seat (14f) in the radial direction.

15. Flowmeter according to Claim 13 or 14, wherein the second seat is formed by a ledge projecting rearwards from the rear wall, with a recess directed upwards and a perforated bottom surface for passage of electrical connections of the connector (19) for connecting to the contacts of the sensor (16).

16. Flowmeter according to one of the preceding claims, wherein the sensor (16) is a Hall effect sensor.

17. Flowmeter according to one of the preceding claims, wherein the sensor (16) is arranged at a radial distance (a) from the axis of the stem (13) and from an axis of the magnetic element (15) smaller than the travel (y) of the stem in the axial direction (Y-Y).

18. Flowmeter according to the preceding claim, **characterized in that** said radial distance (a) is preferably between 4 and 8 mm, more preferably between 5 and 7 mm.

19. Flowmeter according to one of Claims 2-18, wherein a relative axial position between the bell member (12) and the connection means (11) is adjustable by rotating the bell member (12) inside the transverse duct (11a), so that the bottom end of the bell member (12) provided with a closing member (18) can adjust the opening/closing of the branch duct (2).

20. Manifold assembly comprising a manifold (1) with a main duct (1a) extending in a longitudinal direction and one or more branch ducts (2) extending transversely with respect to the main duct (1a) and opening out inside it, wherein respective one or more flowmeters (10) according to one of the preceding claims are coupled with the manifold coaxially with a respective branch duct (2) on a side of the main duct (1a) opposite to the branch duct (2), such that the bottom part (13a) of the stem (13) is inserted inside the branch duct (2) so as to be displaceably moved by the fluid flow inside the branch duct.
